# FASCICULE DE BREVET EUROPEEN

(11) **EP 0 568 474 B1**
(45) Date de publication et mention de la délivrance du brevet: **26.11.1997**
(21) Numéro de dépôt: 93420178.1
(22) Date de dépôt: 28.04.1993
(51) Int. Cl.: H04N 5/08

(54) **Circuit d'extraction de signal de synchronisation dans un signal vidéo composite, en technologie MOS**
MOS-Schaltung zum Extrahieren eines Synchronisierungssignals in einem BAS-Videosignal
MOS circuit for separating a synchronising signal in a composite video signal

(30) Priorité: 30.04.1992 FR 9205753
(43) Date de publication de la demande: 03.11.1993
(73) Titulaire: SGS-THOMSON MICROELECTRONICS S.A., 94250 Gentilly (FR)
(72) Inventeur: Meyer, Jacques, F-38700 Corenc (FR)
(74) Mandataire: de Beaumont, Michel

(56) Documents cités:
- EP-A- 0 200 611
- US-A- 4 385 319

## Description

L'invention concerne les circuits intégrés relatifs aux traitements de signaux de type télévision, c'est-à-dire des signaux composites représentant des lignes d'images, avec pour chaque ligne une succession d'au moins trois portions de signal : une portion de signal de synchronisation de début de ligne, une portion de signal de suppression pendant lequel on ne transmet pas d'information d'image, et enfin le signal utile représentant l'information correspondant à la ligne d'image courante.

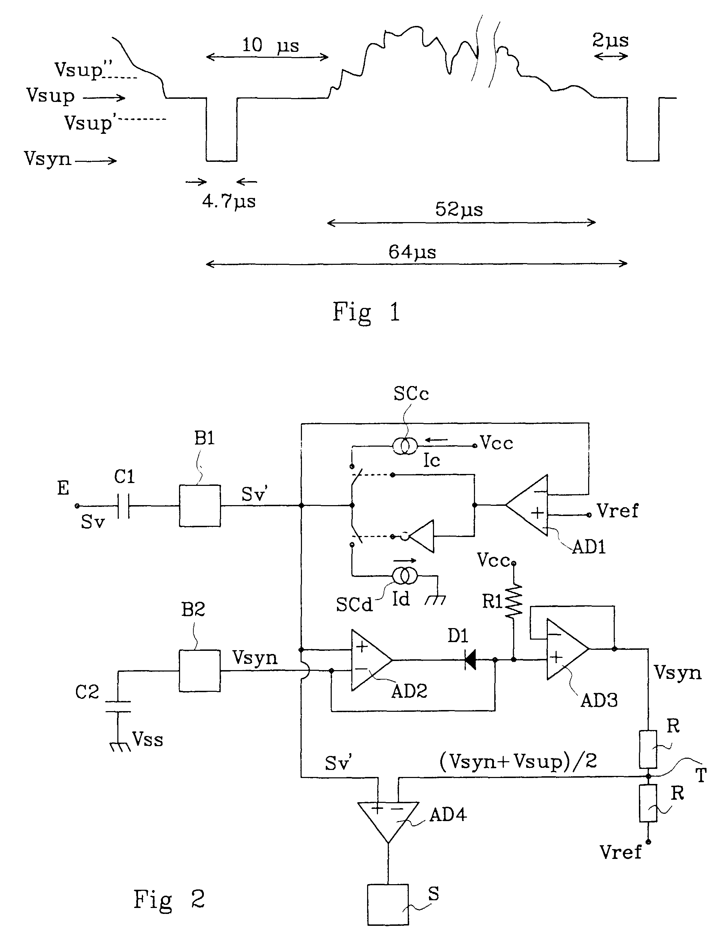

La figure 1 rappelle la constitution normalisée d'un signal de télévision ou signal vidéo composite, tel qu'il est utilisé non seulement pour la transmission de signaux de télévision, mais aussi pour les magnétoscopes, et d'autres systèmes de présentation d'images.

Si on suppose que le potentiel de référence est le niveau de potentiel Vsup transmis pendant la phase de suppression d'information, alors le début de ligne est marqué par un signal de synchronisation qui est une impulsion négative à bords aussi francs que possible, d'une durée d'environ 4,7 microsecondes ; le niveau de suppression Vsup est ensuite transmis pendant une durée d'environ 5,3 microsecondes, le signal utile est transmis en valeur positive au dessus du niveau de suppression pendant une durée de 52 microsecondes, et enfin le niveau de suppression est à nouveau transmis pendant environ 2 microsecondes. La durée totale de transmission pour une ligne est alors d'environ 64 microsecondes.

Pour faire fonctionner un circuit de visualisation d'images de télévision, il faut extraire le signal de synchronisation de ligne, puisqu'il doit commander le retour à la ligne du spot de balayage de l'écran ou, dans des systèmes d'affichage matriciels, il doit déterminer les séquences d'adressage des différentes lignes.

Un but de l'invention est de réaliser un circuit d'extraction du signal de synchronisation dans un signal vidéo composite, capable de recevoir le signal vidéo composite et de fournir une impulsion de synchronisation en début de chaque ligne.

Dans la technique connue, les circuits d'extraction de signal de synchronisation sont en général réalisés selon une technologie de circuits intégrés bipolaires. Cette technologie se prête en effet bien à des fonctions électroniques de type analogique.

Le principe des circuits d'extraction les plus couramment utilisés est rappelé en référence à la figure 2.

Pour produire une impulsion au moment du créneau de synchronisation, il suffit de réaliser une comparaison entre le signal vidéo composite et une valeur de seuil intermédiaire entre le niveau Vsyn de potentiel du fond de synchronisation et le niveau de potentiel de suppression Vsup. Le mieux est d'établir un seuil à (Vsup + Vsyn)/2. Un comparateur recevant le signal vidéo composite et ce seuil fournira une impulsion chaque fois que le signal vidéo passe au dessous du seuil, c'est-à-dire au moment du créneau de synchronisation.

Mais pour cela, il faut pouvoir établir ce seuil et il faut donc connaître les niveaux Vsup et Vsyn du signal reçu. Ces niveaux ne sont pas connus à l'avance. Il faut donc les établir à partir du signal reçu.

De plus, le signal vidéo composite arrive sans être référencé par rapport à un potentiel de référence : c'est un signal variable n'ayant pas de composante continue fixe.

C'est pourquoi on procède en plusieurs étapes : fixation d'un potentiel de référence du signal composite, détermination des potentiels Vsyn et Vsup par rapport à cette référence, établissement d'un seuil de valeur (Vsyn + Vsup)/2, et comparaison entre le signal composite aligné et ce seuil. Ce type d'agencement est décrit dans US-A-4 385 319.

Dans les circuits classiques dont le principe est représenté à la figure 2, on aligne le niveau de suppression Vsup du signal vidéo sur un potentiel de référence Vref.

Pour cela, le signal vidéo composite Sv est appliqué, à travers une première capacité C1 en série, à une borne d'entrée B1 du circuit intégré. Le signal Sv est décalé d'une valeur correspondant à la composante de charge continue de la capacité C1, pour produire un signal Sv'. Un premier étage de circuit, relié à la borne B1, contrôle alors la charge de la capacité C1 pour que le signal décalé Sv' ait en moyenne son niveau de suppression Vsup exactement égal à un potentiel de référence Vref.

Cet étage d'alignement comprend essentiellement un comparateur différentiel AD1 dont une entrée est reliée au potentiel Vref, et dont l'autre entrée est reliée à la borne B1. La sortie du comparateur commande soit l'activation d'une source de courant SCc de charge de la capacité C1, tendant à augmenter la tension continue aux bornes de cette capacité, soit l'activation d'une source de courant de décharge SCd tendant à diminuer cette composante continue. Le rapport des courants de charge et de décharge est tel qu'un équilibre s'établit alors automatiquement pour une charge de la capacité C1 telle que la tension de suppression Vsup du signal Sv' soit égale à Vref.

Un deuxième étage de circuit établit alors une tension Vsyn égale au potentiel du fond du créneau de synchronisation du signal Sv'. Ce circuit est simplement un détecteur de valeur crête négative du signal Sv'. Il comporte une capacité C2 destinée à stocker une charge continue représentant le niveau Vsyn. Elle est reliée entre une borne B2 et la masse. Un amplificateur différentiel AD2 bouclé par une diode D1 reçoit sur une entrée le signal Sv' et sur une autre entrée la tension stockée sur la capacité C2. La diode D1 permet de décharger rapidement la capacité lorsque le niveau de Sv' descend au dessous du niveau stocké dans la capacité ; il en résulte que le niveau de potentiel de la capacité s'établit en permanence à la valeur du niveau le plus bas du signal Sv', c'est-à-dire le niveau Vsyn du fond du créneau de synchronisation. Une résistance de charge R1 permet de recharger lentement la capacité pour les cas où le niveau du fond de synchronisation tend à remonter. Enfin, un étage suiveur (amplificateur AD3 bouclé en gain unitaire) permet de recopier exactement la tension Vsyn présente aux bornes de la capacité pour l'appliquer à un diviseur résistif ; l'étage suiveur évite toute décharge intempestive de la capacité C2 par les résistances de ce diviseur.

Enfin, le circuit d'extraction comporte un troisième étage qui est un étage de comparaison entre le signal Sv' et un seuil égal à (Vsyn + Vsup)/2, c'est-à-dire maintenant à (Vsyn + Vref)/2. Cet étage comprend le diviseur résistif mentionné précédemment, avec deux résistances R de même valeur connectées en série entre la sortie du suiveur (à Vsyn) et la tension de référence Vref. Un comparateur (amplificateur différentiel AD4) reçoit sur une entrée le signal Sv' et sur une autre entrée le point milieu du diviseur résistif ; il fournit à sa sortie S le signal de synchronisation extrait du signal vidéo.

Dans certaines applications, on souhaite réaliser des circuits complexes de traitement de signaux vidéo, dans lesquels le circuit d'extraction de synchronisation n'est qu'un élément parmi d'autres. Pour ces circuits, il devient nécessaire d'utiliser des technologies MOS (technologies à base de transistors à effet de champ à grille isolée). Cela peut venir de ce que le nombre de transistors est très élevé, par exemple plusieurs dizaines ou centaines de milliers de transistors, et dans ce cas, les impératifs de réduction de consommation amènent à utiliser des technologies à faible consommation (technologies à transistors MOS complémentaires). Cela peut venir aussi de ce que les circuits à réaliser sont pour la plupart des circuits logiques plutôt que des circuits analogiques, les technologies MOS se prêtant mieux que les technologies bipolaires aux circuits logiques.

Dans ces cas, si on veut éviter d'utiliser des technologies mixtes (bipolaire/MOS) qui sont coûteuses, il est nécessaire de réaliser tous les circuits à partir de transitors MOS.

Or on s'est aperçu que le circuit de la figure 2, aisément réalisable en technologie bipolaire, devient complexe, encombrant, et peu fiable si on essaye de le transposer en technologie MOS.

Parmi les explications qu'on peut en donner, il y a le fait qu'on ne sait pas facilement réaliser des sources de tension de référence telles que la tension Vref qui doit être appliquée de manière identique en deux points différents du circuit. Il y a aussi le fait que les amplificateurs différentiels ont une tension de décalage nettement plus élevée en technologie MOS qu'en technologie bipolaire si on utilise des schémas simples d'amplificateur ; or ces tensions de décalage interviennent directement sur la précision d'établissement des niveaux Vsyn et Vsup, donc sur le seuil (Vsyn+Vsup)/2 et sur la comparaison de Sv' avec ce seuil. A titre d'exemple, l'ordre de grandeur de la différence entre Vsup et Vsyn est d'environ 150 à 300 mV alors que les tensions de décalage d'amplificateurs différentiels MOS ont couramment une dispersion de 10 à 20 mV. Enfin, les amplificateurs suiveurs sont plus délicats à réaliser en technologie MOS (risques d'instabilité plus grands).

On a trouvé selon l'invention un moyen particulièrement intéressant pour réaliser un circuit d'extraction de signal de synchronisation en technologie MOS.

Le circuit selon l'invention, alimenté entre une borne d'alimentation (Vcc) et une borne de masse (Vss) comporte les éléments suivants : des moyens d'alignement du signal composite sur un potentiel de référence, et un comparateur de sortie pour comparer le signal composite aligné avec un niveau qui est intermédiaire entre un niveau (Vsyn) de fond de créneau de synchronisation et un niveau (Vsup) de suppression de signal utile. De plus, le circuit comporte selon l 'invention :
- un étage d'alignement du niveau de fond de synchronisation (Vsyn) sur le potentiel de la masse (Vss) ;
- un étage de détection du niveau de suppression (Vsup) du signal composite (Sv') aligné par le circuit d'alignement, cet étage comprenant une capacité, un deuxième comparateur ayant une première entrée pour recevoir le signal composite aligné et une deuxième entrée, ce comparateur commandant la charge ou la décharge de la capacité selon le signe de la différence de potentiel entre ses entrées, et un transistor de contre-réaction dont la grille est connectée à la capacité et dont la source est reliée à la deuxième entrée du deuxième comparateur pour faire varier la tension sur cette deuxième entrée lorsque la charge de la capacité varie, dans un sens lié au sens de variation de cette charge ; et
- un diviseur de tension relié entre la deuxième entrée du deuxième comparateur et la masse, le comparateur de sortie ayant une entrée reliée au point milieu du diviseur et une deuxième entrée recevant le signal composite aligné (Sv').

Le niveau de seuil intermédiaire entre Vsup et Vsyn est de préférence la demi-somme (Vsup+Vsyn)/2.

Les comparateurs sont de préférence des amplificateurs différentiels simples. Le schéma n'utilise pas d'amplificateur différentiel bouclé en gain unitaire.

La capacité utilisée dans l'étage de détection de niveau de suppression stocke une tension qui n'a pas besoin d'être précisément la tension Vsup.

Cette capacité peut être extérieure à la puce sur laquelle est intégré le circuit d'extraction.

Le circuit d'alignement du niveau du fond de créneau de synchronisation sur la masse comporte de préférence : une deuxième capacité recevant sur une extrémité le signal vidéo composite non aligné et fournissant sur sa deuxième extrémité le signal vidéo aligné, un premier transistor apte à charger rapidement cette capacité dès que le signal composite aligné tend à descendre au dessous du potentiel de masse, la source de ce transistor étant reliée à la deuxième extrémité de la capacité et sa grille étant connectée à la grille d'un deuxième transistor monté en diode et alimenté par une source de courant, la source de ce deuxième transistor étant reliée à la masse.

Une branche de fuite de courant est de préférence ménagée entre la deuxième extrémité de la capacité et la masse.

Enfin, de préférence, les comparateurs du circuit selon l'invention comportent un étage d'entrée réalisé avec des transistors d'entrée à canal P si la masse est le potentiel le plus négatif de l'alimentation, de manière à pouvoir détecter le signe de la différence entre des tensions d'entrée même lorsque ces tensions sont très proches du potentiel de masse.

D'autres caractéristiques de l'invention apparaîtront à la lecture de la description détaillée qui suit et qui est faite en relation avec les dessins annexés dans lesquels :
- la figure 1, déjà décrite, représente un signal vidéo composite ;
- la figure 2, également déjà décrite, représente un circuit d'extraction de synchronisation de l'art antérieur ;
- la figure 3 représente un circuit d'extraction de synchronisation selon l'invention ; et
- la figure 4 représente schématiquement l'étage d'entrée d'un amplificateur différentiel utilisé dans le circuit de l'invention.

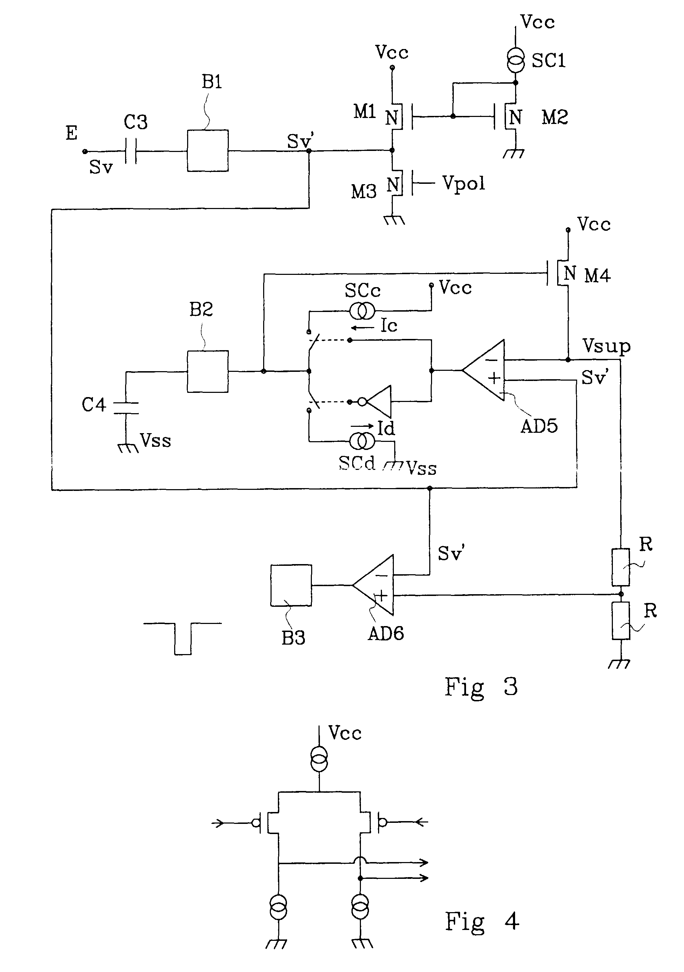

Le mode de réalisation préférentiel de l'invention est représenté à la figure 3.

Le circuit d'extraction est alimenté entre une borne d'alimentation Vcc et une borne de masse Vss. La borne de masse est en principe au potentiel le plus bas, tandis que la borne Vcc est à un potentiel positif ; toutefois on pourrait prévoir une disposition contraire, en remplaçant à chaque fois les transistors à canal N par des transistors à canal P et réciproquement et en inversant à chaque fois les signes des différences de potentiel dans le circuit. Dans le mode de réalisation préféré décrit ici, la masse est le potentiel bas Vss.

Contrairement au circuit de la figure 2, le circuit selon l'invention comporte un étage d'alignement du niveau de fond de synchronisation (Vsyn) sur la masse et non pas un étage d'alignement du niveau de suppression (Vsup) sur un potentiel de référence.

Cet étage d'alignement comprend la capacité C3 montée en série entre une borne E de réception du signal vidéo composite et une borne B1. La capacité C3 possède donc une première extrémité recevant le signal vidéo composite (non aligné) Sv et une deuxième extrémité sur laquelle apparaît le signal aligné Sv'. La tension continue moyenne aux bornes de la capacité représente le décalage permanent de tension nécessaire pour aligner le potentiel de fond du créneau de synchronisation sur la masse.

La capacité C3 peut être une capacité extérieure à la puce sur laquelle est intégré le circuit d'extraction, et dans ce cas la borne B1 à laquelle est connectée la deuxième borne de la capacité est une borne d'entrée du circuit intégré.

Un premier transistor à effet de champ M1 permet de charger cette capacité. Il est dimensionné de manière que cette charge puisse être rapide lorsque le transistor est rendu conducteur par un niveau de tension approprié sur sa grille. La rapidité dépend du temps qu'on tolère pour l'établissement de l'alignement.

Le transistor M1 (canal N) a sa source reliée à la borne B1 et son drain relié par exemple directement à l'alimentation positive Vcc. Sa grille est reliée à une source de polarisation constante établie par un deuxième transistor à canal N M2 monté en diode (drain et grille reliés) avec sa source à la masse. Le transistor M2 est alimenté en courant par une source de courant SC1 de faible valeur (de l'ordre de 1 microampère).

Un tel montage place le transistor M2 en limite de conduction. Il en résulte que le transistor M1, qui a les mêmes caractéristiques de tension de seuil que le transistor M2, se trouvera en limite de conduction si sa source est au même potentiel que la masse, et il deviendra franchement conducteur dès que sa source (donc la borne B1) tendra à descendre au dessous de la masse.

Le transistor M2 doit être d'autant plus gros qu'on veut mieux assurer qu'il soit en limite de conduction, la source de courant SC1 qui l'alimente pouvant au contraire être très petite. Le transistor M1 doit être d'autant plus gros qu'on veut qu'il charge rapidement la capacité C3.

Enfin, un transistor M3 (ou une source de courant ou une résistance constituant une branche de fuite de courant) est connecté entre la borne B1 et la masse pour assurer un léger courant de décharge de la capacité ; ce courant permet de revenir à l'alignement désiré lorsque le niveau Vsyn du fond de créneau du signal Sv' tend à remonter au dessus du potentiel de masse. Ce transistor est un petit transistor car la constante de temps de décharge de la capacité dans ce dernier cas doit rester longue devant la constante de temps de charge.

Ce montage maintient en moyenne aux bornes de la capacité C3 une charge continue telle que le niveau du fond du créneau Sv' reste toujours au potentiel de la masse.

La deuxième partie du circuit d'extraction sert à établir une tension continue Vsup égale au niveau de suppression du signal Sv', c'est-à-dire égale au niveau de potentiel du signal Sv' immédiatement avant et immédiatement après le créneau de synchronisation.

Cet étage d'élaboration de Vsup fonctionne sur le principe de la charge et la décharge d'une capacité C4 avec des courants de charge et décharge différents et dont le rapport est lié aux rapports entre les durées des trois parties du signal composite.

La capacité C4 a une première borne reliée à un point à potentiel fixe, de préférence la masse Vss, et une autre extrémité reliée de préférence à une borne extérieure B2 du circuit intégré. La raison en est que la capacité C4 est de préférence extérieure au circuit intégré.

Un amplificateur différentiel AD5 fonctionnant en comparateur est monté de manière à commander soit la charge soit la décharge de la capacité selon que le signal composite aligné Sv' est supérieur ou inférieur au niveau de suppression Vsup. L'une des entrées de l'amplificateur AD5 reçoit le signal Sv' et l'autre entrée reçoit la tension Vsup qui est liée au potentiel de la borne B2 en ce sens qu'elle tend à suivre les variations de ce potentiel d'une manière qu'on indiquera plus loin. Par exemple l'entrée non-inverseuse (+) de l'amplificateur reçoit le signal Sv' de la borne B1. L'entrée inverseuse (-) reçoit Vsup.

Supposons que le courant de charge soit Ic et le courant de décharge Id, et supposons que la tension appliquée à l'entrée inverseuse de l'amplificateur AD5 soit une valeur Vsup' ou Vsup" qui n'est pas exactement la valeur désirée Vsup, c'est-à-dire pas exactement la valeur du signal Sv' immédiatement avant et immédiatement après le créneau de synchronisation.

Supposons que Vsup' est inférieur à Vsup (voir figure 1). Pendant environ 4,7 microsecondes au maximum, le signal Sv' va être plus faible que Vsup', de sorte que le comparateur AD5 va commander la décharge de C4 avec un courant Id pendant 4,7 ; microsecondes et, pendant environ 59,3 microsecondes, le comparateur AD5 va commander la charge de la capacité avec un courant Ic. Le résultat doit être une charge de la capacité dans un sens tendant à remonter Vsup' vers Vsup. On conçoit que cela soit possible à condition que le courant de charge Ic soit au moins égal à 1/12 du courant de décharge Id car les temps de charge et de décharge sont dans ce cas dans un rapport d'au moins 12.

Inversement, supposons que le niveau de suppression sur l'entrée (-) du comparateur soit Vsup" un peu trop fort par rapport au vrai niveau Vsup du signal composite aligné Sv'. Il faut alors décharger la capacité C4 dans un sens tendant à réduire Vsup". Or le comparateur va commander la décharge pendant environ 12 microsecondes au moins, et il va commander la charge pendant au maximum 52 microsecondes. On arrivera à obtenir une décharge de C4 à condition que le courant de charge soit au maximum égal à environ 1/4 car les temps de charge et décharge sont dans un rapport d'environ 4.

Le circuit va donc agir en permanence pour tendre à ramener la tension Vsup' ou Vsup" vers la valeur désirée à condition que le rapport entre Ic et Id soit compris entre les valeurs ci-dessus, de préférence par exemple égal à environ 1/8.

Pour que les variations de tension sur l'entrée inverseuse du comparateur AD5 soient liées aux variations de tension aux bornes de la capacité C4, on a prévu ici un transistor M4 à canal N, dont la grille est reliée à la capacité C4 (borne B2), dont la source est reliée à l'entrée inverseuse du comparateur AD5, et dont le drain est alimenté par exemple par la borne Vcc. Le niveau de potentiel Vsup de l'entrée inverseuse n'est pas le même que celui de la borne B2, mais il varie lorsque celui de la borne B2 varie et il est important de remarquer qu'il suffit que les sens de variation soient liés pour que le circuit fonctionne correctement. Le plus simple est évidemment que les sens de variation soient les mêmes : la tension à l'entrée inverseuse du comparateur AD5 augmente lorsque la tension aux bornes de la capacité C4 augmente ; c'est ce qui se passe avec le transistor M4 monté comme indiqué précédemment.

On obtient donc sur l'entrée inverseuse du comparateur AD5 la tension Vsup représentant le niveau de suppression du signal vidéo aligné Sv'.

Une petite résistance pourrait être insérée entre la source de M4 et l'amplificateur sans changer le principe.

La réalisation de sources de courant SCc et SCd pour produire des courants de charge Ic et de décharge Id de rapports désirés, contrôlées l'une par un état du comparateur et l'autre par l'état inverse, ne pose pas de problème en technologie MOS.

La troisième partie du circuit d'extraction est le circuit de comparaison entre le signal Sv' et un seuil (Vsup + Vsyn)/2. Vsyn est égal au potentiel de masse. Pour établir ce seuil on utilise un diviseur de tension. Ici, ce diviseur est de préférence un diviseur résistif à deux résistances de valeur R connecté entre l'entrée inverseuse du comparateur AD5 et la masse. Le point milieu du diviseur est appliqué à une entrée d'un amplificateur différentiel à grand gain (comparateur) AD6, l'autre entrée recevant le signal vidéo Sv' de la borne B1. La sortie de ce comparateur AD6 fournit le signal de synchronisation extrait du signal composite. Cette sortie peut être utilisée à l'intérieur du circuit intégré et/ou être transmise sur une borne extérieure B3 de celui-ci.

On notera que les résistances du pont diviseur ne participent pas à décharger la capacité C4 puisque celle-ci n'est connectée qu'à la grille du transistor M4.

Etant donné que les niveaux de tension mis en jeu dans les comparaisons sont assez faibles, il est souhaitable que les amplificateurs jouant le rôle de comparateurs (AD5, AD6) soient constitués chacun avec un premier étage d'entrée utilisant des transistors d'entrée MOS à canal P comme cela est représenté sur la figure 4. Ceci est valable bien entendu si la masse Vss est le potentiel bas de l'alimentation.

Il est important de noter que le circuit d'extraction ainsi décrit présente en outre l'avantage d'être très facile à tester : il est en effet important de pouvoir tester les amplificateurs AD5 et AD6, ainsi que les transistors M1 à M3. Les amplificateurs sont facilement testés car ils ont leurs deux entrées et leur sortie reliées soit directement soit presque directement à des bornes extérieures du circuit intégré.

Le fonctionnement de l'étage d'alignement (M1 à M3) est testé par la borne B1 : il suffit de tracer une caractéristique courant/tension sur la borne B1 pour vérifier le comportement (redresseur sans seuil) de l'ensemble M1,M2,M3.

## Revendications

1. Circuit d'extraction de signal de synchronisation dans un signal vidéo composite, alimenté entre une borne d'alimentation (Vcc) et une borne de masse (Vss), comportant des moyens d'alignement du signal composite sur un potentiel de référence, et un comparateur de sortie (AD6) pour comparer le signal composite aligné (Sv') avec un niveau qui est intermédiaire entre un niveau de fond de créneau de synchronisation (Vsyn) et un niveau de suppression de signal (Vsup), caractérisé en ce qu'il est réalisé en technologie MOS et en ce qu'il comporte :
un étage (M1, M2, M3) d'alignement du niveau de fond de synchronisation (Vsyn) sur le potentiel de la masse (Vss) ;
un étage de détection du niveau de suppression (Vsup) du signal composite (Sv') aligné par le circuit d'alignement, cet étage comprenant une capacité (C4), un deuxième comparateur (AD5) ayant une première entrée pour recevoir le signal composite aligné et une deuxième entrée, ce comparateur commandant la charge ou la décharge de la capacité (C4) selon le signe de la différence de potentiel entre ses entrées, et un transistor de contre-réaction (M4) dont la grille est connectée à la capacité et dont la source est reliée à la deuxième entrée du deuxième comparateur pour faire varier la tension sur cette deuxième entrée lorsque la charge de la capacité (C4) varie, dans un sens lié au sens de variation de cette charge ; et
un diviseur de tension relié entre la deuxième entrée du deuxième comparateur et la masse, le comparateur de sortie (AD6) ayant une entrée reliée au point milieu du diviseur et une deuxième entrée recevant le signal composite aligné (Sv').

2. Circuit d'extraction selon la revendication 1, caractérisé en ce que la sortie du deuxième comparateur (AD5) est connectée de manière à activer soit une source de courant (SCc) de charge de la capacité, soit une source de courant de décharge (SCd), selon le signe de la tension entre ses entrées, les valeurs des courants de charge et de décharge étant dans un rapport déterminé.

3. Circuit selon la revendication 2, caractérisé en ce que ledit rapport est sensiblement 8.

4. Circuit selon l'une des revendications 1 à 3, caractérisé en ce que les comparateurs (AD5, AD6) comportent un étage différentiel d'entrée avec deux transistors d'entrée à canal P, la borne de masse étant une borne de potentiel bas de l'alimentation.

5. Circuit selon l'une des revendications 1 à 4, caractérisé en ce que l'étage d'alignement comporte une deuxième capacité (C3) recevant sur une extrémité le signal vidéo composite non aligné et fournissant sur sa deuxième extrémité le signal vidéo aligné (Sv'), un premier transistor (M1) apte à charger rapidement cette capacité dès que le signal composite aligné tend à descendre au dessous du potentiel de masse, la source de ce transistor étant reliée à la deuxième extrémité de la capacité et sa grille étant connectée à la grille d'un deuxième transistor (M2) monté en diode et alimenté par une source de courant, la source de ce deuxième transistor étant reliée à la masse.

6. Circuit selon la revendication 5, caractérisé en ce qu'il comporte une branche de fuite de courant (M3) entre la deuxième extrémité de la deuxième capacité et la masse.

## Patentansprüche

1. Schaltung zum Extrahieren eines Synchronisiersignals in einem zusammengesetzten Videosignal (Bildaustastsignal, BAS-Signal), in Anordnung zur Speisung zwischen einem Speiseanschluß (Vcc) und einem Masseanschluß (Vss), mit Schaltmitteln zur Ausrichtung des zusammengesetzten Signals auf einem Bezugssignal, sowie mit einem Ausgangskomparator (AD6) zum Vergleich des ausgerichteten zusammengesetzten Signals (Sv') mit einem Pegel, der zwischen einem unteren Pegel des Synchronrechteckimpulses (Vsyn) und einem Signalunterdrückungspegel (Vsup) liegt,
dadurch gekennzeichnet, daß die Schaltung in MOS-Technik ausgeführt ist und umfaßt:
- eine Stufe (M1, M2, M3) zur Ausrichtung des Pegels des Bodens des Synchronisiersignals (Vsyn) mit Massepotential (Vss);
- eine Stufe zum Nachweis des Austastpegels (Vsup) des durch die Ausrichtschaltung ausgerichteten zusammengesetzten Signals (Sv'), wobei diese Stufe eine Kapazität (C4), einen zweiten Komparator (AD5), welcher einen ersten Eingang zum Empfang des ausgerichteten zusammengesetzten Signals und einen zweiten Eingang aufweist, wobei dieser Komparator die Auf- oder Entladung der Kapazität (C4) in Abhängigkeit vom Vorzeichen des Potentialunterschieds zwischen seinen Eingängen steuert, sowie einen Gegenkopplungstransistor (M4) aufweist, dessen Gate mit der Kapazität und dessen SourceElektrode mit dem zweiten Eingang des zweiten Komparators verbunden ist, um die Spannung an diesem zweiten Eingang bei einer Änderung der Ladung der Kapazität (C4) in einem Richtungssinn zu variieren, der an den Richtungssinn der Änderung dieser Ladung gebunden ist; sowie
- einen zwischen dem zweiten Eingang des zweiten Komparators und Masse liegenden Spannungsteiler, wobei der Ausgangskomparator (AD6) einen mit dem Mittelpunkt des Spannungsteilers verbundenen Eingang sowie einen zweiten Eingang aufweist, welcher das ausgerichtete zusammengesetzte Signal (Sv') zugeführt erhält

2. Extraktionsschaltung nach Anspruch 1,
dadurch gekennzeichnet, daß der Ausgang des zweiten Komparators (AD5) so angeschlossen ist, daß er entweder eine Aufladestromquelle (SCc) für die Kapazität oder eine Entladestromquelle (SCd) aktiviert, in Abhängigkeit vom Vorzeichen der Spannung zwischen seinen Eingängen, wobei die Beträge der Lade- und Entladeströme in einem vorbestimmten Verhältnis zueinander stehen.

3. Schaltung nach Anspruch 2,
dadurch gekennzeichnet, daß das genannte Verhältnis im wesentlichen 8 beträgt.

4. Schaltung nach einem der Ansprüche 1 bis 3,
dadurch gekennzeichnet, daß die Komparatoren (AD5, AD6) eine Differentialeingangsstufe mit zwei P-Kanal-Eingangstransistoren aufweisen, wobei der Masseanschluß ein Anschluß auf niedrigem Speisepotential ist.

5. Schaltung nach einem der Ansprüche 1 bis 4,
dadurch gekennzeichnet, daß die Ausricht-Stufe eine zweite Kapazität (C3) aufweist, welche an ihrem einen Anschluß das nicht-ausgerichtete zusammengesetzte Videosignal zugeführt erhält und an ihrem zweiten Anschluß das ausgerichtete Videosignal (Sv') abgibt, sowie einen ersten Transistor (M1), der diese Kapazität rasch aufladen kann, sobald das ausgerichtete zusammengesetzte Signal unter das Massepotential abzusinken beginnt, wobei der Source-Anschluß dieses Transistors mit dem zweiten Anschluß der Kapazität verbunden ist und sein Gate mit dem Gate eines zweiten Transistors (M2) verbunden ist, der als Diode geschaltet ist und aus einer Stromquelle gespeist wird, wobei der Source-Anschluß dieses zweiten Transistors mit Masse verbunden ist.

6. Schaltung nach Anspruch 5,
dadurch gekennzeichnet, daß sie einen Leckstromzweig (M3) zwischen dem zweiten Anschluß der zweiten Kapazität und Masse aufweist.

## Claims

1. A circuit for extracting the synchronization signal from a composite video signal, fed between a supply terminal (Vcc) and a ground terminal (Vss) including means for aligning said composite signal with a reference voltage, and an output comparator (AD6) for comparing the aligned composite signal (Sv') with a level which is intermediate between the low level (Vsyn) of the synchronization interval and a signal suppression level (Vsup), characterized in that it is fabricated in MOS technology and in that it comprises:
a stage (M1, M2, M3) for aligning the tip level of said synchronization (Vsyn) with said ground voltage (Vss);
a stage for detecting the suppression level (Vsup) of said composite signal (Sv') aligned by the alignment circuit, said stage including a capacitor (C4), a second comparator (AD5) having a first input operable to receive said aligned composite signal and a second input, said comparator controlling charging or discharging of said capacitor (C4) depending on the polarity of the voltage difference between its inputs, and a negative feedback transistor (M4) whose gate is connected to said capacitor and whose source is connected to the second input of the second comparator to vary the voltage at said second input when charging of said capacitor (C4) varies, in a direction correlated with the variation direction of said charging; and
a voltage divider connected between the second input of said second comparator and ground, the output comparator (AD6) having an input connected to the medium tap of said divider and a second input receiving said aligned composite signal (Sv').

2. An extracting circuit according to claim 1, characterized in that the output of said second comparator (AD5) is connected so as to activate either a current source (SCc) charging said capacitor, or a discharging current source (SCd) depending on the polarity of the voltage between its inputs, the values of the charging and discharging currents being within a determined ratio.

3. A circuit according to claim 2, characterized in that said ratio is substantially equal to 8.

4. A circuit according to any of claims 1 to 3, characterized in that said comparators (AD5, AD6) include an input differential stage with two P-channel input transistors, the ground terminal being a low voltage terminal of the power supply.

5. A circuit according to any of claims 1 to 4, characterized in that said alignment stage includes a second capacitor (C3) receiving at one terminal the non-aligned composite video signal and providing at its second terminal said aligned video signal (Sv'), a first transistor (M1) adapted to rapidly charge said capacitor as soon as said aligned composite signal tends to fall below the ground voltage, the source of said transistor being connected to the second terminal of said capacitor and its gate being connected to the gate of a second transistor (M2), serially connected and fed by a current source, the source of said second transistor being connected to ground.

6. A circuit according to claim 5, characterized in that it includes a current leak leg (M3) between the second terminal of said capacitor and ground.
